## Europäisches Patentamt
## European Patent Office
## Office européen des brevets

(19)

(11) Numéro de publication: **0 247 909**
**B1**

# FASCICULE DE BREVET EUROPEEN

(12)

(45) Date de publication du fascicule du brevet:
27.06.90

(51) Int. Cl.⁵: **G01D 5/26**, G01F 23/28

(21) Numéro de dépôt: 87400791.7

(22) Date de dépôt: 08.04.87

(54) Capteur à fibre optique.

(30) Priorité: 24.04.86 FR 8605948

(43) Date de publication de la demande:
02.12.87 Bulletin 87/49

(45) Mention de la délivrance du brevet:
27.06.90 Bulletin 90/26

(84) Etats contractants désignés:
AT BE CH DE ES FR GB GR IT LI LU NL SE

(56) Documents cités:
EP-A- 0 000 319
FR-A- 2 499 244
US-A- 3 384 885
US-A- 4 436 995

(73) Titulaire: **PHOTONETICS, 52 Avenue de l'Europe,
F-78160 Marly le Roi(FR)**

(72) Inventeur: **Arditty, Hervé, 27 rue de l'Abreuvoir,
F-78160 Marly Le Roi(FR)**
Inventeur: **Desforges, François Xavier, 17 rue de
l'Hermitage, F-78000 Versailles(FR)**
Inventeur: **Jeunhomme, Luc, 5 Square Lavoisier,
F-78330 Fontenay le Fleuri(FR)**

(74) Mandataire: **Thibon-Littaye, Annick, Cabinet A.
THIBON-LITTAYE 11 rue de l'Etang,
F-78160 Marly-le-Roi(FR)**

ACTORUM AG

## Description

La présente invention concerne un capteur à fibre optique et un dispositif de détection comportant au moins un tel capteur.

On connaît tout l'intérêt des fibres optiques dans la transmission d'informations par ondes lumineuses à partir de capteurs les plus divers. L'invention s'intéresse au cas particulier où le capteur est constitué au moins en partie par une zone sensible de la fibre elle-même. De tels capteurs peuvent être placés plusieurs en série le long de la fibre. Ils permettent une collecte d'informations par leurs zones sensibles constituées en général de courbures de la fibre.

L'emploi des fibres optiques est déjà largement utilisé dans les techniques de mesure. Notamment la demande de brevet européen EP-A-0 000 319 déposée au nom de BATTELLE MEMORIAL INSTITUTE présentait un dispositif utilisant des fibres optiques de manière à être utilisé comme réfractomètre ou indicateur de niveau. L'utilisation dans ce dispositif d'une fibre optique implique l'injection à une extrémité de la fibre immergée dans un liquide d'indice de réfraction différent de la constitution de la fibre, d'un faisceau lumineux selon une certaine direction de manière à permettre une réflexion des rayons le long de cette fibre. Lorsque les rayons, lors des différentes réflexions, dépassent un angle limite par rapport au milieu environnant, les rayons d'angle d'incidence inférieur se trouvent réfractés en dehors de la fibre. Lorsqu'une surface incurvée se présente le long de la fibre, la réduction de l'angle d'incidence des rayons venant frapper la surface entraîne une augmentation de l'angle limite des faisceaux par rapport au liquide d'indice de réfraction impliquant, aux rayons incidents dépassant l'angle limite, de passer par réfraction dans ce liquide. Par une combinaison de courbures alternées, disposées les unes à la suite des autres en sens inverse, on permet d'obtenir un signal lumineux présentant une sensibilité particulièrement importante jouant un rôle d'amplification des effets obtenus lors de la traversée de la première courbure. Ce dispositif permet des applications notamment dans la mesure d'un niveau de liquide, mais nécessite une installation optique à chaque extrémité de la fibre. Il est également courant, dans les techniques de mesure par fibre optique, de faire subir à cette fibre des modifications de forme afin de pouvoir mesurer certains paramètres. Ainsi le brevet US-A-4 436 995 déposé au nom de GENERAL ELECTRIC COMPANY présente des capteurs à fibres optiques pour mesurer l'amplitude de certains paramètres tels que les déplacements mécaniques, la pression, la température, le courant ou la tension électrique. Pour cela, une partie de la fibre correspondant à une zone sensible est soumise à des variations de courbures impliquant le changement du paramètre à mesurer. Les pertes résultant des microcourbures sur la fibre impliquent une atténuation de l'énergie lumineuse entre une source optique émettrice et un détecteur optique d'arrivée. Dans ce dispositif on fait subir à la fibre des variations de courbures par l'application de deux dents placées de chaque côté de la fibre que l'on reserre, un creux d'une dent coopérant symétriquement avec une dent, de manière à faire varier la courbure de la fibre. Par cette variation on obtient des détections de paramètres lorsque l'on injecte une énergie lumineuse à une extrémité de la fibre et que l'on en analyse le faisceau à l'autre extrémité.

Plus précisément, la présente invention se rapporte à de tels dispositifs où les signaux lumineux sont émis à une extrémité de la fibre et où le dispositif de réception d'information est placé également à cette même extrémité.

Les phénomènes exploités dans ces dispositifs ne sont plus une transmission directe de lumière d'une extrémité à l'autre de la fibre, mais les informations reçues sont contenues dans un signal dit rétrodiffusé dans les dispositifs classiques, qui se propage en sens inverse de l'impulsion lumineuse d'émission. L'impulsion lumineuse émise à une extrémité de la fibre subit des pertes lors de son cheminement, car une partie de la lumière est diffusée et s'échappe de la fibre. Le signal reçu en retour à l'extrémité d'émission subit donc une atténuation qui augmente avec la distance parcourue dans la fibre. Les zones sensibles de la fibre traduisent les phénomènes qu'elles détectent par des variations d'atténuation de ce signal rétrodiffusé. On peut comprendre que ces variations d'atténuation sont très faibles puisqu'elles portent elles-mêmes sur une part mineure de la lumière totale.

L'invention vise à conserver tous les avantages des capteurs que l'on utilisait jusqu'à présent en exploitant la variation d'atténuation du signal rétrodiffusé reçu par un dispositif placé à la même extrémité de la fibre qu'un dispositif d'émission, tout en permettant néanmoins un signal beaucoup plus important.

L'idée mère consiste à placer la zone sensible dans un milieu de couplage dans lequel la lumière perdue qui s'échappe de cette zone sensible par des moyens tels qu'une courbure ou de quelque manière que ce soit, se propagera et à utiliser une surface rétroréfléchissante de manière à recoupler les pertes dans la fibre.

L'invention a donc pour objet un capteur à fibre optique caractérisé en ce qu'il comporte une zone sensible d'une fibre optique coopérant par l'intermédiaire d'un milieu de couplage optique avec une surface rétroréfléchissante propre à renvoyer dans la fibre optique des pertes lumineuses qui s'en échappent dans la zone sensible.

Ainsi les signaux lumineux se propageant dans la fibre lorsqu'ils arrivent dans la zone sensible de la fibre sont, pour une faible partie d'entre eux, éjectés de la fibre et se propagent dans le milieu de couplage jusqu'à rencontrer la surface rétroréfléchissante qui renvoit les pertes de rayons lumineux dans leurs directions d'incidence pour être réinjectés dans la fibre vers l'extrémité d'émission de ces signaux.

Selon une caractéristique secondaire de l'invention, le capteur présente dans la zone sensible de la fibre optique une courbure provoquant les pertes.

Selon une autre caractéristique secondaire de l'invention, la surface rétroréfléchissante du capteur est orientée angulairement par rapport à un axe de symétrie de la courbure de manière à renvoyer dans la fibre optique un maximum des pertes lumineuses qui s'en échappent dans la zone sensible du fait de la courbure.

Selon une autre caractéristique du capteur, la zone sensible comporte une pluralité de microcourbures successives de la fibre, coopérant avec un même surface rétroréfléchissante.

L'invention s'applique également à une dispositif de détection comportant au moins un capteur tel que précédemment décrit et, à une même extrémité de la fibre optique présentant ladite zone sensible, une source d'émission de signaux lumineux et un système de réception de signaux lumineux d'écho résultant de la rétroréflexion desdites pertes.

Selon une caractéristique secondaire du dispositif de détection, plusieurs zones sensibles sont réparties sur la longueur d'une même fibre.

Trois caractéristiques du capteur peuvent influer sur la réponse des signaux émis : la zone sensible de la fibre, l'éloignement de la surface rétroréfléchissante de la zone sensible de la fibre, la présence, l'absence ou les variations de propriétés du milieu de couplage.

Selon un mode de réalisation particulier du dispositif de détection, la zone sensible comporte une pluralité de microcourbures successives formées entre deux plaques soumises à une pression constituant une grandeur à détecter et portant chacune une surface rétroréfléchissante en regard de la fibre optique, le volume compris entre les deux plaques étant rempli de milieu de couplage.

Selon un second mode de réalisation particulier du dispositif de détection, la distance dans le capteur entre la zone sensible de la fibre où s'échappent les pertes lumineuses et la surface rétroréfléchissante, est variable en fonction d'une grandeur à détecter.

Enfin, selon un troisième mode de réalisation particulier du dispositif de détection, la zone sensible de ladite fibre est placée dans un milieu de couplage dont les propriétés, la présence ou l'absence, traduisent les variations d'une grandeur à détecter.

On décrira maintenant plus en détail une forme de réalisation particulière de l'invention qui en fera mieux comprendre les caractéristiques essentielles et les avantages, étant entendu toutefois que cette forme de réalisation est choisi à titre d'exemple et qu'elle n'est nullement limitative. Sa description est illustrée par les dessins annexés, dans lesquels :

- la figure 1 représente schématiquement la zone sensible de la fibre ;
- la figure 2 illustre une application dans le cas de variation des microcourbures ;
- la figure 3 illustre une application à la variation de distance fibre/surface rétroréfléchissante ;
- la figure 4 est relative à une application à une mesure de niveau.

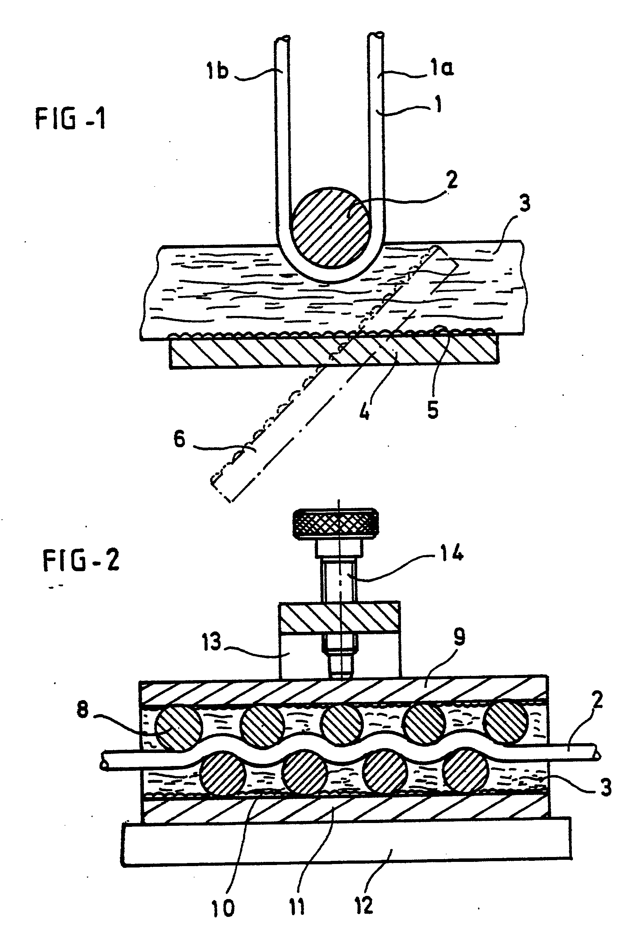

Dans un mode de réalisation particulier d'un dispositif selon l'invention, la figure 1 montre une partie de fibre optique impliquant une zone sensible qui permettra une utilisation d'une source d'émission de signaux lumineux, un système de réception de signaux lumineux d'écho (non représenté) à la même extrémité de la fibre. La fibre optique 1 est courbée localement par des moyens de courbure qui sont constitués par une tige cylindrique 2. Elle présente alors en cet endroit un rayon de courbure plus ou moins important selon le contact qui existe entre la fibre optique 1 et la tige 2. La zone de courbure est placée dans un milieu de couplage optique tel qu'un liquide d'indice de réfraction proche de l'indice de l'enveloppe de la fibre permettant proche de l'indice de l'enveloppe de la fibre permettant la propagation des pertes lumineuses de l'intérieur de la fibre vers le milieu de couplage. A l'intérieur de ce liquide est placée une surface rétroréfléchissante 5, fixée sur un support 4. De manière en soi connue, cette surface rétroréfléchissante 5 est composée d'une succession d'hémisphères réflecteurs de diamètre infime collés les uns contre les autres qui donnent à cette surface un pouvoir de rétroréflexion, c'est-à-dire la capacité de renvoyer les rayons lumineux qui viennent la frapper dans la direction d'incidence de ces rayons. Cette surface rétroréfléchissante 5 est placée proche de la zone sensible réalisée par la courbure de la fibre et est contenue dans le milieu de couplage.

Une fibre optique transmet sur une longueur rectiligne des signaux lumineux par réflexions successives de ces signaux sur sa surface externe. Cependant il est connu que lorsque la fibre optique n'est plus rectiligne et devient alors plus ou moins courbée, les signaux lumineux se propageant à l'intérieur de cette fibre ne sont plus totalement réfléchis, mais sortent de la fibre. L'invention vise donc à utiliser ces pertes pour essayer de les renvoyer en direction inverse de la transmission afin de pouvoir utiliser ces pertes dans les zones de courbure et de pouvoir en déduire des valeurs d'atténuation des signaux électriques liés au signaux lumineux d'écho. Cette mesure sera effectuée sur l'amplitude de l'écho réfléchi par la surface reétroréfléchissante.

Dans le dispositif représenté dans la figure 1, des signaux lumineux sont appliqués à l'extrémité 1A de la fibre et sont réfléchis le long de cette fibre. Lorsqu'ils arrivent à la courbure de la fibre 1, réalisée par la tige cylindrique 2, une partie de ces signaux s'échappent de la fibre dans une direction donnée et entrent dans le milieu de couplage 3. Ces signaux lumineux se propagent dans ce milieu de couplage jusqu'à rencontrer la surface rétroréfléchissante 5. Ces signaux, après une réflexion sur cette surface 5, repartent dans la même direction mais dans un sens opposé pour à nouveau rentrer dans la fibre 1 et repartir vers l'extrémité d'émission 1A de ces signaux. La position de la surface rétroréfléchissante par rapport au rayon de courbure de la fibre est comprise entre deux positions limites. Les fuites des rayons lumineux au niveau de la courbe ne s'effectuent pas selon les tangentes à chaque point de la courbure mais selon un cône dont l'axe est situé dans la direction de l'extrémité d'émission. Il est donc nécessaire de recueillir un maximum de fuites sur la surface rétroréfléchissante et d'orienter cette surface par rapport à l'extrémité d'émission de signaux lumineux. Cette position pourra varier entre les positions angulaires représentées sur la figure 1 par les supports 4 et 6, la position optimale de recueil de pertes étant celle du support 6.

A l'extrémité 1A de la fibre sera disposé un système de réception (non représenté) qui enregistrera l'écho des signaux envoyés lorsqu'une partie de ceux-ci se sera dispersée dans le milieu et aura été à nouveau focalisée vers l'extrémité d'émission. Le renvoi par la surface rétroréfléchissante des signaux perdus dans le liquide constitue une amélioration importante par rapport aux systèmes déjà existants car il permet une meilleure utilisation de la lumière perdue par la courbure alors que jusqu'à présent cette lumière était définitivement perdue. Ce dispositif permet, de plus, d'avoir une augmentation considérable des performances. Un tel dispositif permet d'obtenir des coefficients de détection de pertes ayant une sensibilité de dix à cent fois plus élevée par rapport aux systèmes existants jusqu'à présent. Une telle zone sensible de la fibre permet de recueillir des résultats à partir de signaux envoyés à une de ces extrémités et d'analyser l'écho qui revient vers cette même extrémité. De plus la mesure s'effectuant sur l'amplitude de l'écho lumineux, le nombre maximum de capteurs fonctionnant sur ce principe et pouvant être interrogés par un tel système est indépendant de la largeur temporelle de l'impulsion, ce qui est une amélioration supplémentaire par rapport aux systèmes existants.

La figure 2 représente un dispositif où l'on fait varier la zone sensible qui est constituées par une pluralité de microcourbures successives de la fibre. Ce dispositif s'applique particulièrement à la détection d'une pression s'exerçant sur ladite zone sensible de la fibre. Il est composé d'un étau avec deux plaques 9 et 11. Sur chaque plaque 9 et 11 sont placées des tiges cylindriques de manière régulière, les tiges cylindriques de la plaque 9 étant placées en quinconce par rapport aux tiges cylindriques de la plaque 10. On place la fibre entre les deux series de cylindres 8 et 9. Le volume entre les deux plaques 9 et 11 est rempli de liquide d'indice 3 et toute la surface des deux plaques est recouverte d'un matériau possédant des propriétés rétroréfléchissantes telles que précédemment décrites. Cet étau repose sur un support 12 et possède une saillie supérieure 13 transversée par une vis 14 qui vient appuyer sur la partie extérieure de la plaque 9 de l'étau. Lorsque l'on serre la vis 14 les deux plaques 9 et 11 se rapprochent. La fibre 1 est en contact avec les deux séries de tiges cylindriques. Le rapprochement implique donc une diminution du rayon de toutes les microcourbures. Dans ce dispositif, le coefficient de recouplage demeure constant ainsi que la présence du milieu de recouplage dans tout le volume situé entre les deux plaques 9 et 11. Seules varient les microcourbures placées le long de la fibre dans le dispositif. On peut ainsi mesurer les pertes dues aux courbures le long de la fibre en ayant accès uniquement à une extrémité, avec une qualité de mesure beaucoup plus importante que dans les systèmes existant auparavant qui impliquaient des atténuations de la première composante du signal de retour.

Un tel dispositif a donc l'avantage d'être réalisé avec un appareillage simple et à l'aide d'une zone sensible telle que précédemment décrite ; une application concrète pourra constituer en un détecteur de passage. Un dispositif tel que précédemment décrit sera placé sous les rails de voie de chemin de fer. Le passage d'un train entraînant une force de pression sur ces rails, la plaque supérieure du dispositif se rapprochera de la plaque inférieure entraînant une variation des microcourbures.

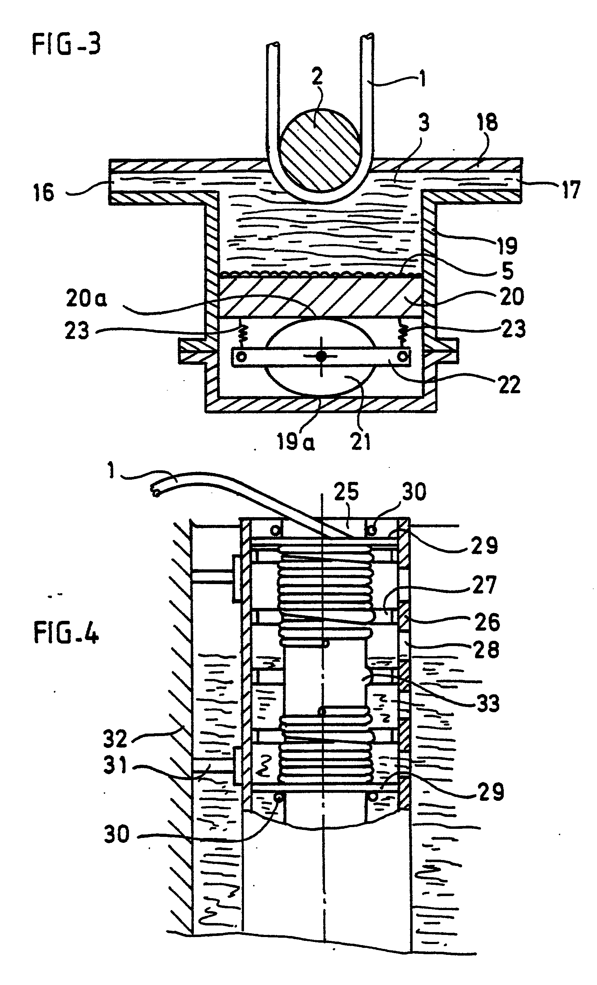

Une autre application de ce capteur à fibre optique est d'utiliser la distance entre la courbure et la surface rétroréfléchissante. La figure 3 illustre cette application. Une fibre optique 1 est courbée à l'aide d'une tige cylindrique 2 et est placée dans un réceptacle limité par des parois 18, 19 rempli d'un liquide d'indice 3. Ce réceptacle contient deux orifices 16, 17, qui permettent au liquide d'entrer ou de sortir dans le système sans faire varier son indice de réfraction. La partie inférieure du réceptacle peut comporter un objet mobile 20. Lorsque cet objet mobile 20 se déplace, la distance entre la surface rétroréfléchissante et la courbure varie. Une application concrète et intéressante peut être faite à un contacteur dans une position d'ouverture et une position de fermeture. Les variations d'état entraînent le déplacement du support de la surface rétroréfléchissante qui est donc détecté par la fibre par une réponse différente à des signaux lumineux qui lui sont appliqués.

Une autre application peut être effectuée dans le cas de variations continues de position. C'est le cas d'une valve, dont l'ouverture varie par la rotation d'une came 21. Lorsqu'on ouvre progressivement cette valve, on effectue une rotation de la pièce 21 qui a une section ovoïde ; cette pièce 21 reste toujours en contact avec la partie inférieure du réceptacle 19 A et en contact en 20 A avec le support 20 de la surface rétroréfléchissante. Le profil de cette pièce 21 étant progressif, la distance entre la surface rétroréfléchissante et la courbure de fibre varie donc progressivement et, la détection de retour d'un signal appliqué à une extrémité peut donc tenir compte de ce déplacement. De manière à assurer un retour correct de la pièce de support 20, des ressorts 23 fixés à cette pièce 20 sont reliés à une tige horizontale 22. Ainsi, lorsque la distance surface rétroréfléchissante/courbures diminuera, les ressorts seront dilatés. Puis, la pièce 21 reviendra à une position initiale, l'effort élastique de ces ressorts ramènera le support 20 dans sa position initiale.

La troisième application s'applique sur les variations de propriétés du milieu de couplage entre la fibre optique et le matériau rétroréfléchissant. Les variations des propriétés optiques du milieu de couplage telles que, par exemple, la température, sont déjà connues mais, dans les dispositifs utilisés auparavant, on utilisait l'incidence sur la transmission des impulsions lumineuses entre les deux extrémités de la fibre alors que, à l'aide de la présente invention, ceci permet d'obtenir les mêmes informations par des phénomènes de réflexion avec une fibre à accès par une seule extrémité. On utilise de manière particulièrement intéressante le liquide d'indice de réflexion de la lumière à une détection non ponctuelle. Ceci est le cas pour une mesure de niveau de liquide telle que, par exemple, dans des réservoirs. Dans de telles applications, la fibre optique 1 est bobinée autour d'une tige 25. Une des extrémités de la fibre est reliée à la source d'émission des signaux et à un système de détection d'échos, l'autre extrémité de la fibre est libre et est enroulée jusqu'à l'extrémité inférieure de la tige 25. La tige 25 est munie sur toute sa longueur, à distances précises, d'une saillie 33 sur laquelle vient en appui la fibre optique. On évite par bobinage autour d'une tige centrale de diamètre suffisamment important des pertes constantes par courbure. La présence de saillies le long de cette tige permet de réaliser une courbure forcée à la fibre constituant alors une zone sensible. Cette tige 25 est placée dans un tube 26 et maintenue dans ce tube à l'aide de grilles 29, 30 qui centrent la tige 25 dans l'axe du tube 26. A des distances régulières, correspondant à la distance entre les saillies 33 de la tige, sont placées sur toute la circonférence intérieure du tube 26 des bandes étroites de matériau rétroréfléchissant 27, ceci régulièrement sur toute la longueur du tube 26.

Enfin, dans ce tube sont ménagés des orifices 28 d'entrée de liquide. Dans un réservoir, le niveau de liquide variant, on pourra détecter le niveau de liquide après avoir réalisé un étalonnage correct des réponses de la fibre à une telle variation de niveau, c'est-à-dire savoir quelle est la bande rétroréfléchissante qui est la dernière en contact avec le liquide. Ce dispositif simple à l'avantage d'être autonome du réservoir et peut être facilement placé dans toute sorte de réservoir. Il est en contact avec le réservoir par des tiges de fixation 31 ou tout autre moyen de support de ce système contre une surface du réservoir.

**Revendications**

1. Capteur à fibre optique, caractérisé en ce qu'il comporte une zone sensible d'une fibre optique (1) coopérant par l'intermédiaire d'un milieu de couplage optique (3) avec une surface rétroréfléchissante (5) propre à renvoyer dans la fibre optique des pertes lumineuses qui s'en échappent dans la zone sensible.

2. Capteur selon la revendication 1, caractérisé en ce que dans ladite zone sensible, la fibre optique présente une courbure provoquant lesdites pertes.

3. Capteur selon la revendication 1, caractérisé en ce qu'il comporte des moyens de courbure (2) de la fibre dans ladite zone sensible.

4. Capteur selon l'une quelconque des revendications 1 à 3, caractérisé en ce que la surface rétroréfléchissante (5) est orientée angulairement par rapport à un axe de symétrie de la courbure, de manière à renvoyer dans la fibre optique un maximum des pertes lumineuses qui s'en échappent dans la zone sensible du fait de la courbure.

5. Capteur selon la revendication 1, caractérisé en ce que ladite zone sensible comporte une pluralité de microcourbures successives de la fibre, coopérant avec une même surface rétroréfléchissante.

6. Dispositif de détection, caractérisé en ce qu'il comporte au moins un capteur selon l'une quelconque des revendications 1 à 5, et à une même extrémité de la fibre optique présentant ladite zone sensible, une source d'émission de signaux lumineux et un système de réception de signaux lumineux d'écho résultant de la rétroréflexion desdites pertes.

7. Dispositif de détection selon la revendication 6, caractérisé en ce que plusieurs zones sensibles sont réparties sur la longueur d'une même fibre.

8. Dispositif de détection selon la revendication 6 ou 7, caractérisé en ce que lesdites pertes lumineuses varient en fonction des variations d'une grandeur à détecter.

9. Dispositif de détection selon la revendication 6 ou 7, caractérisé en ce que la zone sensible comporte une pluralité de microcourbures successives formées entre deux plaques (9, 11) soumises à une pression constituant une grandeur à détecter et portant chacune une surface rétroréfléchissante (5) en regard de la fibre optique (1), le volume compris entre les deux plaques étant rempli de milieu de couplage (3).

10. Dispositif de détection selon la revendication 6 ou 7, caractérisé en ce que dans ledit capteur, la distance entre la zone sensible de la fibre où s'échappent les pertes lumineuses et la surface rétroréfléchissante, est variable en fonction d'une grandeur à détecter.

11. Dispositif de détection selon la revendication 10, caractérisé en ce qu'il comporte une pièce mobile supportant la surface rétroréfléchissante et mobile par rapport à la zone sensible de la fibre, et en ce que la pièce mobile (20) est reliée à un contacteur qui possède une position ouverte et une position fermée, le passage du contacteur de la position ouverte à la position fermée entraînant le déplacement de la pièce mobile d'une première position à une deuxième position par rapport à ladite zone sensible.

12. Dispositif de détection selon la revendication 10, caractérisé en ce qu'il comporte une came de profil progressif (21) en appui élastique sur une pièce mobile (20) supportant la surface rétroréfléchissante de manière à faire varier la distance de la zone sensible de la fibre au matériau rétroréfléchissant.

13. Dispositif de détection selon la revendication 6 ou 7, caractérisé en ce que la zone sensible de la fibre est placée dans un milieu de couplage dont les propriétés, la présence ou l'absence, traduisent les variations d'une grandeur à détecter.

14. Dispositif de détection selon la revendication 13, caractérisé en ce que la fibre est enroulée autour d'une canne centrale (25) munie de saillies (33), lesdites saillies correspondant chacune à une zone sensible, ladite canne centrale étant fixée par des moyens de support (29,30) à un tube (26), des bandes de surface rétroréfléchissante étant disposées régulièrement à l'intérieur du tube au niveau des saillies (33) selon un espacement correspondant à différents niveaux d'un liquide constituant ledit milieu de couplage.

15. Dispositif de détection selon la revendication 14, caractérisé en ce qu'il comporte des moyens électroniques associés à la source d'émission et au système de réception pour déterminer les variations d'intensité du signal d'écho en fonction des variations de ladite grandeur à détecter.

## Patentansprüche

1. Lichtleitfaser-Sensor, dadurch gekennzeichnet, daß er eine empfindliche Zone einer Lichtleitfaser (1) umfaßt, die mittels eines optischen Kopplungsmediums (3) mit einer rückreflektierenden Oberfläche (5) zusammenwirkt, die dazu geeignet ist, Lichtverluste, die in der empfindlichen Zone aus der Lichtleitfaser austreten, in die Lichtleitfaser zurückzustrahlen.

2. Sensor nach Anspruch 1, dadurch gekennzeichnet, daß die Lichtleitfaser in der erwähnten empfindlichen Zone eine Krümmung zeigt, die die erwähnten Verluste bewirkt.

3. Sensor nach Anspruch 1, dadurch gekennzeichnet, daß er Einrichtungen (2) zum Krümmen der Faser in der erwähnten empfindlichen Zone umfaßt.

4. Sensor nach einem der Ansprüche 1 bis 3, dadurch gekennzeichnet, daß die rückreflektierende Oberfläche (5) derart in einem Winkel in bezug auf eine Symmetrieachse der Krümmung ausgerichtet ist, daß eine Höchstmenge der Lichtverluste, die in der empfindlichen Zone auf Grund der Krümmung aus der Lichtleitfaser austreten, in die Lichtleitfaser zurückgestrahlt wird.

5. Sensor nach Anspruch 1, dadurch gekennzeichnet, daß die erwähnte empfindliche Zone eine Vielzahl von aufeinanderfolgenden Mikrokrümmungen der Faser umfaßt, die mit einer gleichen rückreflektierenden Oberfläche zusammenwirken.

6. Erfassungs- bzw. Meßvorrichtung, dadurch gekennzeichnet, daß sie wenigstens einen Sensor nach einem der Ansprüche 1 bis 5 und an einem gleichen Ende der Lichtleitfaser, die die erwähnte empfindliche Zone zeigt, eine Ausstrahlungsquelle für Lichtsignale und ein Empfangssystem für Echo-Lichtsignale, die aus der Rückreflexion der erwähnten Verluste resultieren, umfaßt.

7. Erfassungs- bzw. Meßvorrichtung nach Anspruch 6, dadurch gekennzeichnet, daß über die Länge einer gleichen Faser mehrere empfindliche Zonen verteilt sind.

8. Erfassungs- bzw. Meßvorrichtung nach Anspruch 6 oder 7, dadurch gekennzeichnet, daß sich die erwähnten Lichtverluste in Abhängigkeit von Änderungen einer zu erfassenden bzw. zu messenden Größe ändern.

9. Erfassungs- bzw. Meßvorrichtung nach Anspruch 6 oder 7, dadurch gekennzeichnet, daß die empfindliche Zone eine Vielzahl von aufeinanderfolgenden Mikrokrümmungen umfaßt, die zwischen zwei Platten (9, 11) gebildet sind, die einem Druck ausgesetzt sind, der eine zu erfassende bzw. zu messende Größe darstellt, wobei jede Platte eine der Lichtleitfaser (1) gegenüberliegende rückreflektierende Oberfläche (5) trägt, wobei das Volumen, das zwischen den zwei Platten eingeschlossen ist, mit Kopplungsmedium (3) gefüllt ist.

10. Erfassungs- bzw. Meßvorrichtung nach Anspruch 6 oder 7, dadurch gekennzeichnet, daß in dem erwähnten Sensor der Abstand zwischen der empfindlichen Zone der Faser, wo die Lichtverluste austreten, und der rückreflektierenden Oberfläche in Abhängigkeit von einer zu erfassenden bzw. zu messenden Größe veränderlich ist.

11. Erfassungs- bzw. Meßvorrichtung nach Anspruch 10, dadurch gekennzeichnet , daß sie ein bewegliches Teil umfaßt, das die rückreflektierende Oberfläche trägt und in bezug auf die empfindliche Zone der Faser beweglich ist, und daß das bewegliche Teil (20) mit einem Einschalter verbunden ist, der eine geöffnete Stellung und eine geschlossene Stellung besitzt, wobei der Übergang des Einschalters von der geöffneten Stellung in die geschlossene Stellung die Verschiebung des beweglichen Teils von einer ersten Lage in eine zweite Lage in bezug auf die erwähnte empfindliche Zone zur Folge hat.

12. Erfassungs- bzw. Meßvorrichtung nach Anspruch 10, dadurch gekennzeichnet, daß sie einen Nocken (21) mit zunehmendem Profil bzw. Querschnitt umfaßt, der derart an ein bewegliches Teil (20), das die rückreflektierende Oberfläche trägt, elastisch anstößt, daß eine Änderung des Abstandes der empfindlichen Zone der Faser von dem rückreflektierenden Material bewirkt wird.

13. Erfassungs- bzw. Meßvorrichtung nach Anspruch 6 oder 7, dadurch gekennzeichnet, daß die empfindliche Zone der Faser in einem Kopplungsmedium angeordnet ist, dessen Eigenschaften, Vorhandensein oder Abwesenheit die Änderungen einer zu erfassenden bzw. zu messenden Größe ausdrücken.

14. Erfassungs- bzw. Meßvorrichtung nach Anspruch 13, dadurch gekennzeichnet, daß die Faser um ein Mittelrohr (25) herumgewickelt ist, das mit Vorsprüngen (33) versehen ist, wobei jeder der erwähnten Vorsprünge einer empfindlichen Zone entspricht, wobei das erwähnte Mittelrohr mit Halteeinrichtungen (29, 30) an einem Rohr (26) befestigt ist, wobei im Inneren des Rohres (26) in derselben Höhe wie die Vorsprünge (33) Streifen mit rückreflektierender Oberfläche regelmäßig gemäß einem Abstand angeordnet sind, der verschiedenen Standhöhen einer das erwähnte Kopplungsmedium darstellenden Flüssigkeit entspricht.

15. Erfassungs- bzw. Meßvorrichtung nach Anspruch 14, dadurch gekennzeichnet, daß sie elektronische Einrichtungen umfaßt, die mit der Ausstrahlungsquelle und mit dem Empfangssystem verbunden bzw. diesen zugeordnet sind, um die Änderungen der Intensität des Echo-Signals in Abhängigkeit von den Änderungen der erwähnten zu erfassenden bzw. messenden Größe zu ermitteln.

## Claims

1. Optical fiber sensor, characterized in that it comprises a sensitive zone of an optical fiber (1) cooperating through the agency of an optical couplant (3) with a retroreflecting surface (5) adapted to return into the optical fiber light losses which escape in said sensitive zone.

2. Sensor according to claim 1, characterized in that the optical fiber is provided with a loss-inducing bend in the sensitive zone aforesaid.

3. Sensor according to claim 1, characterized in that it is provided with means (2) for bending the optical fiber in the sensitive zone aforesaid.

4. Sensor according to any of claims 1 to 3, characterized in that the retroreflecting surface (5) is angularly oriented with respect to an axis of symmetry of the bend, in such a manner as to return into the optical fiber a maximum quantity of light losses which escape from it in the sensitive zone as a result of of the bend.

5. Sensor according to claim 1, characterized in that the sensitive zone aforesaid has a plurality of successive fiber microbends cooperating with one same retroreflecting surface.

6. Detection device, characterized in that it comprises at least one sensor according to any of claims 1 to 5 and, at one same end of the optical fiber which is provided with the sensitive zone aforesaid, a light-signal emission source and a system for receiving echo light signals resulting from retroreflection of said light losses.

7. Detection device according to claim 6, characterized in that a plurality of sensitive zones are distributed along the length of a same optical fiber.

8. Detection device according to claim 6 or 7, characterized in that the light losses aforesaid vary as a function of the variations in a quantity to be detected.

9. Detection device according to claim 6 or 7, characterized in that the sensitive zone has a plurality of successive microbends formed between two plates (9, 11) which are subjected to a pressure constituting a quantity to be detected, and are both carrying, respectively a retroreflecting surface (5) located opposite to the optical fiber (1), the internal space between the two plates being filled with couplant (3).

10. Detection device according to claim 6 or 7, characterized in that the distance within said sensor between the sensitive fiber zone from which the light losses escape and the retroreflecting surface is variable as a function of a quantity to be detected.

11. Detection device according to claim 10, characterized in that it includes a movable part supporting the retroreflecting surface and capable of moving with respect to the sensitive zone of the fiber and in that the movable part (20) is connected to a contactor having an open position and a closed position, the transition of the contactor from the open position to the closed position causing the displacement of the movable part from a first position to a second position with respect to said sensitive zone.

12. Detection device according to claim 10, characterized in that it includes a cam having a progressive profile (21) and resiliently applied against a movable part (20) supporting the retroreflecting surface in such a manner as to produce a variation in distance between the sensitive zone of the fiber and the retroreflecting material.

13. Detection device according to claim 6 or 7, characterized in that the sensitive zone of the fiber is placed in a couplant, the properties, the presence or the absence of which represent the variations in a quantity to be detected.

14. Detection device according to claim 13, characterized in that the fiber is coiled around a central rod (25) provided with bosses (33), each of said bosses corresponding to one sensitive zone, said central rod being attached to a tube (26) by supporting means, (29, 30) retroreflecting surface strips being disposed in a uniform manner within the tube at the level of the bosses (33) with a relative spacing corresponding to different levels of a liquid constituting said couplant.

15. Detection device according to claim 14, characterized in that it includes electronic means associated with the emission source and with the receiving system for determining the variations in intensity of the echo signal as a function of the variations in said quantity to be detected.

FIG -1

1b

1a

1

2

3

4

5

6

FIG - 2

14

13

9

8

2

3

10

11

12

FIG-3

2

1

3

18

16

17

19

5

20a

20

23

23

22

19a

21

1

25

30

29

27

26

28

33

FIG.4

32

31

30

29